# EUROPEAN PATENT SPECIFICATION

(11) **EP 1 264 852 B1**
(45) Date of publication and mention of the grant of the patent: **28.07.2004**
(21) Application number: 02077113.5
(22) Date of filing: 29.05.2002
(51) Int. Cl.: C08G 63/16, C08G 63/82, C08G 63/85, C08G 63/183

(54) **Process for the preparation of polyester resins**
Verfahren zur Herstellung von Polyesterharzen
Procédé pour la préparation de résines de polyester

(30) Priority: 07.06.2001 IT MI20011206
(43) Date of publication of application: 11.12.2002
(73) Proprietor: Montefibre S.p.A., 20131 Milano (IT)
(72) Inventor: Contessa, Socrate, 84125 Salerno (IT); Bisbiglia, Maria, 80022 Arzano (Napoli) (IT)
(74) Representative: De Gregori, Antonella

(56) References cited:
- WO-A-02/068497
- US-A- 4 254 018
- DATABASE CA [Online] CHEMICAL ABSTRACTS SERVICE, COLUMBUS, OHIO, US; MIMURA, TAKASHI: "White polyester films" retrieved from STN Database accession no. 130:312848 XP002222713 & JP 11 116716 A (TORAY INDUSTRIES, INC., JAPAN) 27 April 1999 (1999-04-27)

## Description

The present invention relates to a process for the preparation of polyester resins.

More specifically, the present invention relates to a process for the preparation of polyethyleneterephthalate using titanium oxide as synthesis catalyst.

It is well known, for example from German patent 2,738,093, that in the industrial production of widely used polyester resins, such as polyethyleneterephthalate (PET) or polybutyleneterephthalate (PBT), the most commonly used synthesis catalysts essentially consist of compounds of antimonium, titanium and germanium, optionally mixed with each other. Whereas germanium is rarely used due to its high cost which makes it unsuitable for mass productions, titanium and above all antimonium are widely used in large quantities.

In industrial practice there is the tendency to preferably use antimonium compounds combined with organic salts, for example zinc, manganese, cobalt acetates, when the synthesis is carried out starting from dimethylterephthalate, or antimonium compounds alone when starting from terephthalic acid. Titanium, on the other hand, is widely used in the synthesis of PBT whereas it is rarely used in the synthesis of PET as it gives the polymer an unpleasant yellow colouring.

Catalysts based on titanium dioxide powders having a particular microcrystalline structure have been commercially proposed by the company Acordis and Satchleben, with the aim of eliminating the drawbacks created by the yellow colouring of the PET produced when it is synthesized in the presence of titanium. The results, however, as demonstrated below, are not particularly valid even in the presence of stabilizers such as phosphoric acid or organic phosphates, for example trimethylphosphate.

Another example is US-A-4,254,018. It discloses dimethylterephthalate and ethylene glycol transesterification in the presence of Mn(OAc)₂ to BHET and subsequent polymerization using TiO₂ and triethylphosphonoacetate (PEE). The document "White polyester films" from Chemical Abstracts Service STN database accession n.130:312848 XP002222713 & JP 11 116716 A discloses composition comprising PET, TiO₂ and triethylphosphonoacetate. WO02/068497 discloses a catalyst comprising a titanium compound and a phosphorous compound. Cobalt, antimony, manganese and zinc compounds can be included in the catalytically active composition. The catalyst is used for producing polyesters.

The Applicant has now found a method for obtaining PET with improved or comparable characteristics, with respect to both the colour and physico-chemical and processability properties, with standard PET using commercial titanium dioxide as polymerization catalyst, also reducing the concentration of antimonium in the catalytic formulation, to zero.

The object of the present invention therefore relates to a process for the preparation of polyethyleneterephtha-late which comprises polymerizing the reagents in the presence of a catalytic system consisting of 0-80% by weight of antimonium and 20-100% by weight of commercial titanium dioxide having a microcrystalline structure and a stabilizer selected from trimethylphosphonoacetate, triethylphosphonoacetate and tributylphosphonoacetate.

The PET is synthesized in two steps. In the first step, dimethylterephthalate and ethylene glycol are transesterified to (2-hydroxyethyl)terephthalate (BHET) operating at a temperature ranging from 160 to 200°C and in the presence of one or more transesterification catalysts selected from organic salts, for example magnesium, cobalt, manganese, zinc and cadmium acetates. Alternatively, it is possible to substitute the dimethylterephthalate with terephthalic acid and in this case, the esterification reaction for producing BHET is effected under slight pressure and a temperature of some tens of degrees, one or two, higher than the reaction with dimethylterephthalate generally without using any catalyst.

The BHET is then polymerized in the presence of the stabilizers having formula (I) and the catalytic system object of the present invention at a temperature ranging from 260 to 290°C at pressures lower than 15 Pa. The titanium dioxide catalyst is present in the polymerization mixture in a concentration ranging from 50 to 150 ppm, calculated with respect to the PET produced, whereas the antimonium, expressed as oxide, can be present up to 200 ppm.

Titanium dioxide is present on the market under the trade-name of C94, of the company Acordis, or HOMBIFAST PC, of the company Satchleben. This material has a microcrystalline structure which makes it perfectly soluble in the end-polymer.

The stabilizers according to the present invention are trimethylphosphonoacetate, triethylphosphonoacetate, tributylphosphonoacetate. These products are added to the polymerization mixture in a quantity ranging from 0.01 to 0.5% by weight with respect to the total.

At the end of the polymerization, the PET has an intrinsic viscosity, measured from solutions in o-chlorophenol at 35°C in concentrations of 0.6 g per 50 ml, by means of an automatic Shotte-Gerate viscosimeter, ranging from 0.4 to 1.5 dl/g. The polymers thus obtained have characteristics like standard PET and can be subjected to classical extrusion processes for obtaining fibres in the form of both continuous and staple filaments, optionally dyeable, or in the preparation of end-products, films or containers, also for food products.

Some illustrative but non-limiting examples are provided for a better understanding of the present invention and for its embodiment.

### EXAMPLE 1 (Preparation of standard PET)

8000 g (41.24 moles) of dimethylterephthalate and 4860 g (78.38 moles) of 1,2-ethanediol are charged into a 20 l steel reactor. A glycol solution containing 1.336 mmoles of Mn, 6.264 mmoles of Mg, 4.192 mmoles of Co and 2.24 mmoles of Zn are added, as transesterification catalyst, to the molten product, at 145°C.

The reaction mixture is brought according to a preselected temperature profile to 230°C allowing the complete distillation of the methanol. 14.83 mmoles of P as phosphoric acid are added at this temperature, as process stabilizer. 25 mmoles of Sb (equal to 380 ppm of Sb with respect to the PET) are subsequently added in the form of glycolate as polycondensation catalyst.

The excess ethanediol is then distilled and when the reaction mass reaches 260°C, the pressure is gradually reduced to 1 mbar, after which the temperature is further increased to 295°C and the mass is left to react under these conditions allowing the reaction ethanediol to be removed.

Once the desired viscosity has been reached, and after bringing the equipment to atmospheric pressure with nitrogen, the reaction product is extruded and granulated producing a polymer having an intrinsic viscosity equal to 0.635 and a yellow index, measured with the CieLab system, equal to 8. The total synthesis time evaluated at the beginning of the reaction phase under vacuum until the end of the polycondensation was 81 minutes.

### EXAMPLE 2 (Comparative)

The synthesis of PET is carried out under the same experimental conditions as Example 1, except for the final temperature which is brought from 295°C to 285°C and for the substitution of the polycondensation catalyst Sb with 0.4 g (equal to 50 ppm with respect to the PET) of TiO₂ available on the market as C94 powder of Acordis. The process stabilizers is still phosphoric acid.

The extruded and granulated polymer has an intrinsic viscosity of 0.63 dl/g and a yellow index of 24. The polycondensation proves to be 104 minutes.

### EXAMPLE 3 (Comparative)

The synthesis of PET is carried out under the same experimental conditions as Example 2, with the substitution of phosphoric acid with an equal quantity of P (14.83 mmoles) added in the form of trimethylphosphate.

The extruded and granulated polymer has an intrinsic viscosity of 0.627 dl/g and a yellow index of 19. The polycondensation proves to be 102 minutes.

### EXAMPLE 4

The synthesis of PET is carried out under the same experimental conditions as Example 2, with the substitution of phosphoric acid with an equal quantity of P (14.83 mmoles) added in the form of triethylphosphonoacetate.

The extruded and granulated polymer has an intrinsic viscosity of 0.622 dl/g and a yellow index of 15. The polycondensation proves to be 89 minutes.

### EXAMPLE 5 (Comparative)

The synthesis of PET is carried out under the same experimental conditions as Example 2, but using as catalyst TiO₂ in powder form sold under the trade-name of HOMBIFAST PC of Satchleben (the stabilizers is phosphoric acid).

The extruded and granulated polymer has an intrinsic viscosity of 0.648 dl/g and a yellow index of 23. The polycondensation proves to be 82 minutes.

### EXAMPLE 6

The synthesis of PET is carried out under the same experimental conditions as Example 5, with the substitution of phosphoric acid with an equal quantity of P (14.83 mmoles) added in the form of triethylphosphonoacetate.

The extruded and granulated polymer has an intrinsic viscosity of 0.641 dl/g and a yellow index of 13. The polycondensation proves to be 106 minutes.

### EXAMPLE 7 (Comparative)

The synthesis of PET is carried out under the same experimental conditions as Example 5, with the substitution of phosphoric acid with an equal quantity of P (14.83 mmoles) added in the form of trimethylphosphate.

The extruded and granulated polymer has an intrinsic viscosity of 0.611 dl/g and a yellow index of 17. The polycondensation proves to be 125 minutes.

## Claims

1. A process for the preparation of polyethyleneterephthalate (PET) which comprises polymerizing the reagents in the presence of a catalytic system consisting of 0-80% by weight of antimonium and 20-100% by weight, of commercial titanium dioxide having a microcrystalline structure and a stabilizer selected from trimethylphosphonoacetate, triethylphosphonoaoetate and tributylphosphonoacetate.

2. The process according to claim 1, wherein the preparation of PET comprises, before polymerization, a first transesterification step in which dimethylterephthalate and ethylene glycol are transesterified to (2-hydroxyethyl)terephthalate operating at a temperature ranging from 160 to 200°C and in the presence of one or more transesterification catalysts selected from organic salts of magnesium, cobalt, manganese, zinc and cadmium.

3. The process according to claim 1, wherein the preparation of PET comprises, before polymerization, a first reaction step in which terephthalic acid and ethylene glycol are esterified to (2-hydroxyethyl)terephthalate operating at a temperature of one or two tens of degrees higher than the reaction with dimethylterephthalate and in the absence of a catalyst.

4. The process according to any of the previous claims, wherein the polymerization step is carried out at a temperature ranging from 260 to 290°C and at pressures lower than 15 Pa.

5. The process according to any of the previous claims, wherein the titanium dioxide catalyst is present in the polymerization mixture in a concentration ranging from 50 to 150 ppm, calculated with respect to the PET produced, whereas the antimonium, expressed as oxide, is present in a concentration of up to 200 ppm.

6. The process according to any of the previous claims, wherein the stabilizer is added to the polymerization mixture in a quantity ranging from 0.01 to 0.5% by weight with respect to the total.

## Patentansprüche

1. Ein Verfahren zur Herstellung von Polyethylenterephthalat (PET), umfassend die Polymerisation der Reagenzien in Gegenwart von einem katalytischen System bestehend aus 0 - 80 Gew.-% Antimon und 20 - 100 Gew.-%, kommerziellem Titandioxid mit einer mikrokristallinen Struktur und einem Stabilisator, der aus Trimethylphosphonoacetat, Triethylphosphonoacetat und Tributylphosphonoacetat gewählt ist.

2. Das Verfahren gemäß Anspruch 1, worin die Herstellung von PET vor der Polymerisation einen ersten Umesterungsschritt umfasst, in dem Dimethylterephthalat und Ethylenglycol zu (2-Hydroxyethyl)terephthalat umgeestert werden, wobei bei einer Temperatur im Bereich von 160 - 200°C und in Gegenwart von einem oder mehreren Umesterungskatalysatoren, die aus organischen Salzen von Magnesium, Cobalt, Mangan, Zink und Cadmium gewählt sind, gearbeitet wird.

3. Das Verfahren gemäß Anspruch 1, worin die Herstellung von PET vor der Polymerisation einen ersten Reaktionsschritt umfasst, in dem Terephthalsäure und Ethylenglycol zu (2-Hydroxyethyl)terephthalat verestert werden, wobei bei einer Temperatur ein oder zwei Zehner-Grade höher als bei der Reaktion mit Dimethylterephthalat und in Abwesenheit eines Katalysators gearbeitet wird.

4. Das Verfahren gemäß einem der vorhergehenden Ansprüche, worin der Polymerisationsschritt bei einer Temperatur im Bereich von 260 - 290°C und bei Drücken niedriger als 15 Pa durchgeführt wird.

5. Das Verfahren gemäß einem der vorhergehenden Ansprüche, worin der Titandioxidkatalysator in der Polymerisationsmischung in einer Konzentration im Bereich von 50 - 150 ppm vorliegt, bezogen auf das hergestellte PET berechnet, während das Antimon, ausgedrückt als Oxid, in einer Konzentration von bis zu 200 ppm vorliegt.

6. Das Verfahren gemäß einem der vorhergehenden Ansprüche, worin der Stabilisator zu der Polymerisationsmischung in einer Menge zugegeben wird, die im Bereich von 0,01 - 0,5 Gew.-% liegt, bezogen auf das Gesamtgewicht.

## Revendications

1. Procédé de préparation de poly(éthylène téréphtalate) PET, qui comporte le fait de faire polymériser les réactifs en présence d'un système catalytique constitué de 0 à 80 % en poids d'antimoine et de 20 à 100 % en poids de dioxyde de titane du commerce présentant une structure microcristalline et un stabilisant choisi parmi le phosphonoacétate de triméthyle, le phosphonoacétate de triéthyle et le phosphonoacétate de tributyle.

2. Procédé conforme à la revendication 1, dans lequel la préparation du PET comporte, avant la polymérisation, une première étape de transestérification dans laquelle on effectue la transestérification de téréphtalate de diméthyle, avec de l'éthylèneglycol, en téréphtalate de 2-hydroxyéthyle, en opérant à une température de 160 à 200 °C et en présence d'un ou plusieurs catalyseurs de transestérification choisis parmi les sels organiques de magnésium, de cobalt, de manganèse, de zinc ou de cadmium.

3. Procédé conforme à la revendication 1, dans lequel la préparation du PET comporte, avant la polymérisation, une première étape de réaction dans laquelle on effectue avec de l'éthylèneglycol l'estérification d'acide téréphtalique en téréphtalate de 2-hydroxyéthyle, en opérant à une température supérieure d'une ou deux dizaines de degrés à celle indiquée pour la réaction partant de téréphtalate de diméthyle, et en l'absence de catalyseur.

4. Procédé conforme à l'une des revendications précédentes, dans lequel l'étape de polymérisation est effectuée à une température de 260 à 290 °C et sous une pression inférieure à 15 Pa.

5. Procédé conforme à l'une des revendications précédentes, dans lequel le catalyseur dioxyde de titane se trouve dans le mélange de polymérisation en une concentration qui, calculée par rapport au PET produit, vaut de 50 à 150 ppm, alors que l'antimoine s'y trouve en une concentration qui, calculée pour l'oxyde, vaut au plus 200 ppm.

6. Procédé conforme à l'une des revendications précédentes, dans lequel le stabilisant est ajouté au mélange de polymérisation en une quantité représentant de 0,01 à 0,5 % du poids total du mélange.
